# EUROPEAN PATENT APPLICATION

(11) **EP 3 474 541 A1**
(43) Date of publication of application: **24.04.2019**
(21) Application number: 17196836.5
(22) Date of filing: 17.10.2017
(51) Int. Cl.: H04N 5/353, G03B 15/02, G01B 11/25, H04B 10/116

(54) **3D CAMERA SYSTEM WITH ROLLING-SHUTTER IMAGE SENSOR AND ARRAY OF ADDRESSABLE LIGHT SOURCES**

(71) Applicant: ams AG, 8141 Premstätten (AT)
(72) Inventor: Meynants, Guy, B-2470 Retie (BE); Walschap, Tom, B-2880 Bornem (BE)
(74) Representative: Epping - Hermann - Fischer

(57) **Abstract**

The system comprises an array (1) of addressable light sources (3), which is configured for an activation of the light sources (3) individually or in groups, an image sensor comprising pixels, which are configured for the detection of a predefined light pattern, and a rolling shutter of the image sensor. The array of addressable light sources is configured for a consecutive activation of the light sources according to the predefined light pattern or part of the predefined light pattern, and the rolling shutter is configured to expose areas of the image sensor in accordance with the activation of the light sources, so that the pixels in an exposed area are illuminated and the pixels that are outside the exposed area are shielded from illumination.

## Description

The present disclosure applies to the field of structured-light projection for capture of 3D image information.

Structured-light systems capture the image of a special light pattern, which is projected on an object. Three-dimensional properties of the object are computed from this image. In such systems, LED or VCSEL projectors, especially emitting light in the near-infrared (NIR) spectrum, and CMOS image sensor (CIS) modules are typically employed. Short exposure times and strong illumination levels may be required to avoid motion artefacts or adverse effects of background light.

The light pattern can be created by the VCSEL structure or by a mask in the optical path, and a lens can serve to direct the light over the field of view. Considerations of eye safety may limit the maximal duration of the illumination. Strong light pulses emitted during short exposure times generate a structured light pattern that is sufficiently distinct even in the presence of bright background light.

The projected light pattern is captured by an image sensor. A global shutter image sensor is typically used, because it is favourable for capturing entire light patterns produced by short illumination, in particular on moving objects. All pixels are exposed at the same time, and the image is subsequently read out. Global shutter pixels are more complex to manufacture due to extra process steps required to manufacture the in-pixel memory element(s). Global shutter pixels also have a smaller saturation level for the same pixel size, and are typically larger in size than rolling shutter pixels due to the required in-pixel memory element(s). So a suitable rolling shutter solution will be preferable.

When a rolling shutter is used, the illumination may be continuous during the entire readout time, but it requires high power consumption. Considerations of eye safety may essentially restrict the maximum light intensity, and this is a drawback if bright objects are to be illuminated or bright background light is present.

The light emission may instead be pulsed in such a manner that illumination is effected after a global or rolling reset at a moment when all pixels are sensitive. In this case the projection of the light pattern can be increased to high power, so that the light pattern remains easily detectable even on a bright object. The only limitation is the output power of the light source. When a rolling shutter is used, the pixels are also exposed to the light in the intervals between the light pulses, and this can create artefacts if a further light source emitting at the wavelength of the light pulses is present. The first pixel rows that are read out are exposed during a shorter time interval than the pixel rows that are read out at a later time, and this may cause a gradient in the image.

It is an object of the invention to present a structured-light system with rolling-shutter image sensor for low power consumption and high illumination level within eye safety limits.

This object is achieved with the 3D camera system according to claim 1. Embodiments derive from the dependent claims.

The definitions as described above also apply to the following description unless stated otherwise.

The term "frame" will be used in the sense of "one image of the set of still images that constitute a sequence of images like a film or video". 3D means three-dimensional, as usual.

The 3D camera system comprises an array of addressable light sources, which is configured for an activation of the light sources individually or in groups, an image sensor comprising a two-dimensional array of pixels, which are configured for the detection of a predefined light pattern, and a rolling shutter of the image sensor. The array of addressable light sources is configured for a consecutive activation of the light sources according to the predefined light pattern or part of the predefined light pattern, and the rolling shutter is configured to expose areas of the image sensor in accordance with the activation of the light sources, so that the pixels in an exposed area are illuminated by the activated light sources.

In an embodiment of the 3D camera system the array of addressable light sources is configured for an activation of the light sources in groups comprising rows of the array.

In a further embodiment the array of addressable light sources is configured for an activation of each of the light sources individually.

A further embodiment comprises a mask or projection lens providing the predefined light pattern.

In a further embodiment the predefined light pattern is provided by encoding the consecutive activation of the light sources.

In a further embodiment the predefined light pattern is temporary and varied by encoding the consecutive activation of the light sources.

In a further embodiment the array of addressable light sources is configured to generate a portion of the predefined light pattern, and a diffractive optical element is configured to generate the predefined light pattern by replicating the portion of the predefined light pattern generated by the array of addressable light sources. Such an array of addressable light sources may especially be a linear array of addressable light sources, which may especially comprise individually addressable light sources.

In a further embodiment the light sources emit light in the near-infrared spectrum.

In a further embodiment, the synchronized illumination is used in conjunction with 2 synchronized CMOS image sensors and used in an active stereovision 3D system.

The following is a more detailed description of examples of the 3D camera system in conjunction with the appended figures.
Figure 1 is a top view of an array of individually addressable light sources.
Figure 2 is a top view of a rolling-shutter image sensor.
Figure 3 is a top view according to Figure 1 for another state of operation.
Figure 4 is a top view according to Figure 2 for another state of activation.
Figure 5 shows a linear array of individually addressable light sources with a diffractive optical element.
Figure 6 is a diagram showing the time intervals of illumination and readout for different rows of pixels with illumination synchronized to exposure for each row.
Figure 7 is a diagram according to Figure 6 for a variant with longer illumination intervals.
Figure 8 is a diagram according to Figure 6 for a variant wherein each row of light sources illuminates two rows of pixels.
Figure 9 is a diagram according to Figure 8 for a variant with shorter illumination intervals.
Figure 10 is a diagram according to Figure 9 for a variant wherein the illumination and readout intervals do not overlap.
Figure 11 shows three examples of coded light patterns.
Figure 12 illustrates the use of consecutive frames with different encoding patterns.

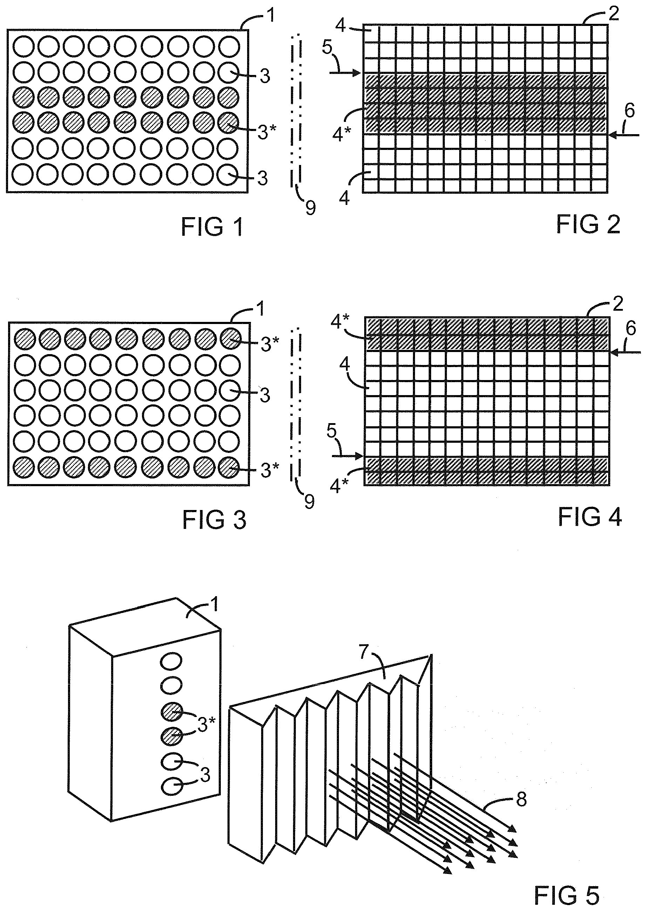

Figure 1 is a top view of an array 1 of addressable light sources 3. The light sources 3 are schematically represented by small circles. The arrangement of the light sources 3 within the array 1 is arbitrary and may be adapted to the requirements of individual applications; Figure 1 shows a square raster, by way of example. Single light sources 3 or groups of light sources 3 are individually addressable, so that light emission can be switched on and off for each light source 3 or each group of light sources 3 separately. The activated, hence emitting light sources 3* are indicated by hatching in Figure 1, by way of example for a particular state of operation. In this example, the group of emitting light sources 3* comprises two rows of light sources 3. It may generally suffice if the light sources 3 are addressable in groups, especially in groups comprising one of the rows of the array 1 or a plurality of entire rows of the array 1.

The light sources 3 may be any suitable light emitting devices, especially vertical-cavity surface-emitting lasers (VCSELs) or light-emitting diodes (LEDs). An array of VCSELs is especially suitable and can be realized with pitches of typically 10 µm, for instance.

Figure 2 is a top view of a rolling-shutter image sensor, which is employed to detect the image of a light pattern that is projected by the array 1 of addressable light sources 3 on an object that is to be examined. The image sensor 2 comprises an array of pixels, which may especially be CMOS sensors, for instance. The dimensions of the pixels may be typically about 2.5 µm for the wavelength of 940 nm. The size of the pixels may be limited by the diffraction of a camera lens, which may be arranged in front of the image sensor 2.

The rolling shutter 4 allows to expose a selected area of the array of pixels to the light pattern that is projected. An exposed area 4* is indicated in Figure 2 by hatching, by way of example. The exposed area 4* may especially include a group of successive pixel rows.

The array of pixels may especially be controlled by row address logic, which may be integrated in the image sensor 2. The row address logic generates a read pointer 5 and a reset pointer 6. The read pointer 5 is provided to address the row that is to be read out next. The reset pointer 6 is provided to address the row that is to be reset. In Figure 2, the application of the read pointer 5 and the reset pointer 6 to control the time interval when the pixels are activated is schematically indicated by arrows.

The window formed by the rolling shutter is scrolled over the array of pixels, thus changing the area of the image sensor that is exposed to incident light. The window may especially be scrolled from one lateral boundary of the array of pixels to the opposite lateral boundary, for instance, in particular from top to bottom in Figure 2. When a row has been read out, the pointers 5, 6 shift to the next row. After the last row is read, the read pointer 5 returns to the first row. The time interval during which each pixel is exposed depends on the number of rows between the read pointer 5 and the reset pointer 6.

The projected light pattern can be created by a mask 9 in the optical path between the array 1 of addressable light sources 3 and an optional projection lens, for instance, or by the projection lens. The light pattern can instead be created by the array 1 of addressable light sources 3 itself, either through position of the light sources 3 or by means of a two-dimensional addressable array of small light sources. In the latter case, the light sources 3 are addressed in a fashion similar to the addressing scheme of a display or micro-display.

Figure 3 is a top view of the array 1 of addressable light sources 3 according to Figure 1 at a different time, when the emitting light sources 3* are present at locations different from the locations of the emitting light sources 3* indicated in Figure 1. Figure 4 is a corresponding top view of the image sensor 2 according to Figure 2. Figure 4 shows that the reset pointer 6 already starts exposing the next frame.

It is not necessary that the pitch of the array 1 of addressable light sources 3 match the pitch of the array of pixels in the image sensor 2. One row of light sources 3 may extend over several rows of pixels, for example. The image sensor 2 may comprise 500 rows of pixels, for instance, while the array 1 of addressable light sources 3 may comprise 50 rows of light sources 3, for instance, so that each row of emitting light sources 3* illuminates 10 rows of pixels during exposure. It may nevertheless be advantageous if the array 1 of addressable light sources 3 covers the same field of view as the image sensor 2.

The operation of the array 1 of addressable light sources 3 and the array of pixels in the image sensor 2 is to be synchronized, so that each of the exposed pixels is illuminated, while pixels that are not exposed are not necessarily illuminated. The light sources 3 have to be active at least during a time period that falls within the time interval during which the pixels are exposed. The time interval during which the pixels are exposed is controlled by the time when the corresponding rows are reset and the time when the corresponding rows are read out (10 rows in the example given above). At each reset and start of exposure of the next row(s) of pixels, a new group of light sources 3 may be activated, so that the group of emitting light sources 3* may change from row to row, or from each set of rows to each set of rows.

Figure 5 shows a linear array 1 of individually addressable light sources 3, which is provided with a diffractive optical element 7. The diffractive optical element 7 is used to replicate the light pattern generated by the linear array 1 of individually addressable light sources 3 and thus to extend the emitted light beam 8 to cover the entire area that is to be illuminated.

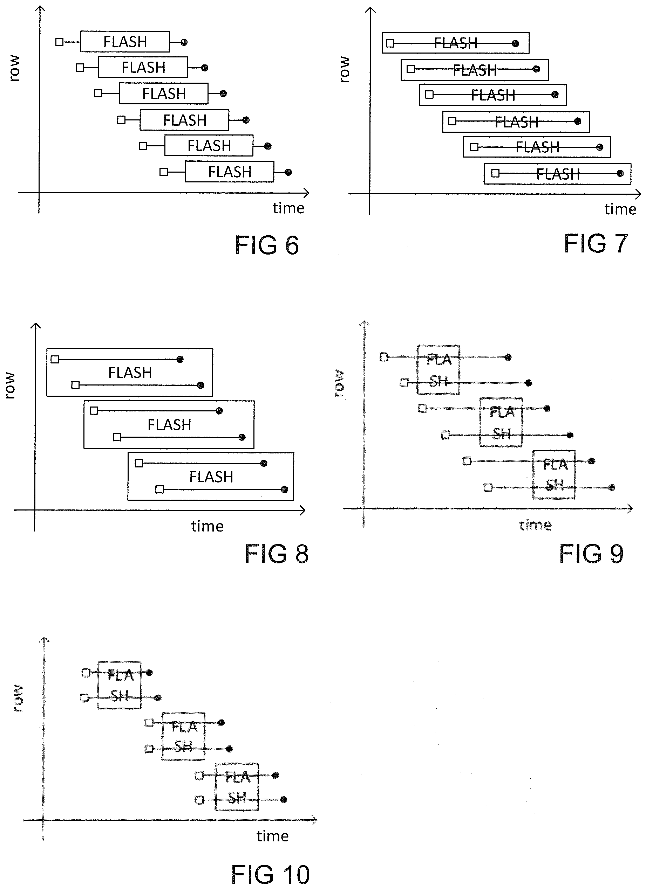

Figure 6 is a diagram, which shows the time intervals of illumination (represented by the bars designated FLASH) and readout for different rows of pixels with illumination synchronized to exposure for each row. Each row of pixels is represented in the diagram by a horizontal line. The open square on the left indicates the start time of the exposure of the pixels to the projected light pattern, and the black dot on the right indicates the end of the exposure. At the end of the exposure period, the pixels of that row are read out and the pixel data is transferred to an image processor.

The data may or may not be stored in a memory coupled to this image processor.

Figure 7 is a diagram according to Figure 6 for a variant with longer illumination intervals. In this variant the time intervals of illumination (again represented by the bars designated FLASH) span the entire exposure period and may even be a bit longer than the actual exposure time.

Figure 8 is a diagram according to Figure 6 for a variant wherein each row of light sources illuminates two rows of pixels.

Figure 9 is a diagram according to Figure 8 for a variant with shorter illumination intervals.

Figure 10 is a diagram according to Figure 9 for a variant wherein the illumination and readout intervals do not overlap.

In the variants according to Figures 8 and 9, the illumination of the next group of exposed pixels may overlap with the readout of the pixels previously illuminated. If the spatial separation between the pixel rows is not sufficient, a simultaneous start of the illumination of different pixel rows according to the diagram of Figure 10 may be favourable. One segment of the array of addressable light sources 1 is activated, and the pixel rows illuminated by that segment are read out. Then the next segment is activated, and the pixel rows illuminated by the next segment are read out, and so on.

The light pattern may especially be defined on a raster of predefined spots. The raster may especially be the raster on which the light sources 3 are arranged. If at least some of the spots are individualized, which may be effected by assigning numbers or coordinates, for instance, a code of the light pattern can be obtained by assigning one of two alternative designations to each spot, according to the light pattern. A "0" may be assigned to the dark spots, and a "1" to the bright spots, for instance.

For a sequence of consecutive frames, each spot yields a corresponding specific sequence of "bright" and "dark" items according to its successive appearences as a bright or a dark spot within each frame. If the number of frames in the sequence is n, the specific sequence has n items, and the number of different possible sequences is 2ⁿ. The array 1 of addressable light sources 3 is suitable for a temporary encoding of the light pattern, which is especially favourable in combination with the rolling-shutter image sensor 2. Thus the light pattern can easily be varied during the operation of the structured-light system.

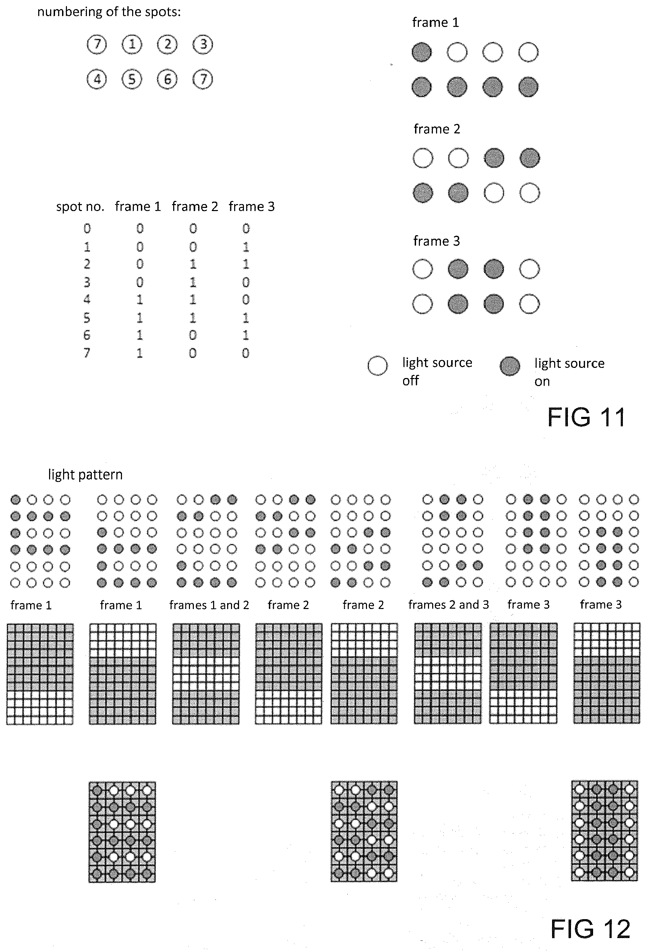

Figure 11 shows three examples of coded light patterns. The light patterns are defined by 2·4 spots on a square raster. The spots carry numbers from 1 to 7, by way of example, which is shown on the upper left side. Three light patterns are represented on the right side. The corresponding assignments of "0" and "1" is given in the list on the lower left side.

Figure 12 illustrates the use of consecutive frames with different encoding patterns. The upper row in Figure 12 shows the array 1 of addressable light sources 3 for eight states of operation at different times in their temporal sequence from left to right. The emitting light sources 3* are represented by the dark circles. The middle row shows the image sensor 2. The exposed section, which is illuminated by the emitting light sources 3*, is represented as a dark area. The bottom row shows the array 1 of addressable light sources 3 for the three entire light patterns, as they would be emitted and detected if the entire array 1 of addressable light sources 3 were simultaneously activated and the rolling shutter were removed from the image sensor 2.

The 3D camera system with rolling-shutter image sensor has many advantages, in particular if compared with global-shutter image sensors. Rolling-shutter image sensors are easier to manufacture and require fewer process steps. They enable faster image readout and provide higher dynamic range and higher quantum efficiency for near-infrared light. They can more easily be combined with backside illumination or wafer stacking to create smaller dies. The peak power consumption is much smaller, as it is spread over the activated segments of the array of addressable light sources. This simplifies power supply design for the driving circuit and may result in a smaller, more compact circuit with smaller decoupling capacitances.

The described 3D camera system with rolling-shutter image sensor can be used for a variety of applications, including three-dimensional image detection using structured light or active stereovision. In a structured-light system, the depth is calculated from the deformation of the projected pattern on the objects in the scene. This calculation can be based upon triangulation and geometric placement of the projector and the camera, or upon other principles. In an active stereovision system, the projected pattern provides structure on surfaces in the scene which have no inherent structure (e. g. a white wall). The distance is calculated from the relative position of the two image sensors in the stereovision system.

### List of reference numerals

- 1: array of addressable light sources
- 2: image sensor
- 3: light source
- 3*: emitting light source
- 4: rolling shutter
- 4*: exposed area
- 5: read pointer
- 6: reset pointer
- 7: diffractive optical element
- 8: light beam
- 9: mask

## Claims

1. A 3D camera system, comprising:
an array (1) of addressable light sources (3), which is configured for an activation of the light sources (3) individually or in groups,
at least one image sensor (2) comprising pixels, which are configured for the detection of a predefined light pattern, and
a rolling shutter (4) of the image sensor (2), wherein
the array (1) of addressable light sources (3) is configured for a consecutive activation of the light sources (3) according to the predefined light pattern or part of the predefined light pattern, and
the rolling shutter (4) is configured to expose areas of the image sensor (2) in accordance with the activation of the light sources (3), so that the pixels in an exposed area (4*) are illuminated by the activated light sources (3).

2. The 3D camera system according to claim 1, wherein
the array (1) of addressable light sources (3) is configured for an activation of the light sources (3) in groups comprising rows of the array (1).

3. The 3D camera system according to claim 1, wherein
the array (1) of addressable light sources (3) is configured for an activation of each of the light sources (3) individually.

4. The 3D camera system according to one of claims 1 to 3, further comprising:
a mask (9) or projection lens providing the predefined light pattern.

5. The 3D camera system according to one of claims 1 to 4, wherein the predefined light pattern is provided by encoding the consecutive activation of the light sources (3).

6. The 3D camera system according to claim 5, wherein the predefined light pattern is temporary and varied by encoding the consecutive activation of the light sources (3).

7. The 3D camera system according to one of claims 1 to 6, further comprising:
the array (1) of addressable light sources (3) being configured to generate a portion of the predefined light pattern, and
a diffractive optical element (7) being configured to generate the predefined light pattern by replicating the portion of the predefined light pattern generated by the array (1) of addressable light sources (3).

8. The 3D camera system according to claim 7, wherein the array (1) of addressable light sources (3) is a linear array (1) of addressable light sources (3).

9. The structured-light system according to claim 8, wherein the linear array (1) of addressable light sources (3) comprises individually addressable light sources (3).

10. The structured-light system according to one of claims 1 to 9, wherein the light sources (3) emit light in the near-infrared spectrum.
